# FASCICULE DE BREVET EUROPEEN

(11) **EP 0 820 969 B1**
(45) Date de publication et mention de la délivrance du brevet: **30.05.2001**
(21) Numéro de dépôt: 97401749.3
(22) Date de dépôt: 21.07.1997
(51) Int. Cl.: C04B 37/00, C04B 37/02, B23K 35/30, B23K 35/32

(54) **Composition et procédé de brasage réactif de matériaux céramiques contenant de l'alumine**
Reaktive Hartlotzusammensetzung und Verfahren für aluminiumoxidhaltige keramische Materialien
Reactive brazing composition and process for alumina-containing ceramic materials

(30) Priorité: 23.07.1996 FR 9609225
(43) Date de publication de la demande: 28.01.1998
(73) Titulaire: COMMISSARIAT A L'ENERGIE ATOMIQUE, 75015 Paris Cédex 15 (FR)
(72) Inventeur: Saint-Antonin, François, 38000 Grenoble (FR); Bourgeois, Gérard, 38360 Engins (FR)
(74) Mandataire: Dubois-Chabert, Guy

(56) Documents cités:
- BE-A- 621 795
- DE-A- 2 116 762
- DE-A- 2 417 478
- US-A- 3 122 424
- US-A- 4 719 081
- CHEMICAL ABSTRACTS, vol. 118, no. 8, 22 Février 1993 Columbus, Ohio, US; abstract no. 65002, SHIMIZU TAKASUMI & AL: "Paste brazes for metals, alloys and ceramics" XP002027336 & JP 04 270 094 A (DAIDO STEEL CO., LTD) 25 Septembre 1992
- DATABASE WPI Section Ch, Week 8438 Derwent Publications Ltd., London, GB; Class M23, AN 84-234988 XP002028270 & JP 59 141 395 A (MITSUI ENG & SHIPBUILD) , 14 Août 1984

## Description

La présente invention a pour objet une composition et un procédé de brasage réactif de matériaux céramiques contenant de l'alumine avec eux-mêmes ou avec des métaux.

Elle s'applique en particulier à la réalisation de pièces de forme complexe à partir d'éléments en céramique de forme simple que l'on assemble avec d'autres éléments en céramique ou avec des éléments métalliques. De telles pièces doivent avantageusement résister à des températures de fonctionnement allant de 500 à 1200°C.

Pour la réalisation de pièces réfractaires comportant des éléments céramiques assemblés à d'autres éléments céramiques ou à des éléments métalliques, les seules techniques d'assemblage possibles sont le soudage par diffusion en phase solide et le brasage réactif. En effet, les techniques d'assemblage faisant intervenir un faisceau d'énergie sans brasure sont inutilisables car il est impossible de faire fondre directement un élément en céramique sans le détruire. De même, les assemblages par collage ne conviennent pas car les colles ne résistent pas à des températures supérieures à 200°C.

Par rapport au brasage, le soudage par diffusion en phase solide présente l'inconvénient d'être très limitatif au niveau des formes des pièces à assembler si on utilise le pressage uniaxial, ou de nécessiter de nombreuses opérations si on utilise la compression isostatique à chaud (fabrication de l'enveloppe, fermeture étanche sous vide, compression isostatique à chaud et usinage final de l'enveloppe). De plus, cette technique est à éviter lors de l'assemblage d'un élément en céramique avec un élément métallique, car elle nécessite des durées longues (1 à plusieurs heures) qui peuvent favoriser un grossissement des grains dans l'élément métallique.

Il est connu que les céramiques contenant de l'alumine sont peu réactives ; aussi, à l'exception d'éléments chimiques actifs tels que Ti, Zr et Hf, la plupart des éléments métalliques de transition tels que Ni, Fe, Cu, Mn, Co, Cr, Pt, Au, Ag et Pd, ne mouillent pas et n'adhèrent pas sur une surface d'alumine. Il est donc nécessaire de recourir à un procédé de brasage où la fusion d'un corps intermédiaire joue le rôle essentiel. Des brasures à base d'un verre d'oxyde mixte de manganèse et de molybdène ont déjà été utilisées dans ce but comme il est décrit par K. White et al dans Materials Science and Engineering, 75, 1985, pages 207-213.

Le procédé de brasage utilisant de telles brasures est relativement complexe et lourd à mettre en oeuvre, car il comprend au moins quatre étapes successives d'enduction de l'alumine avec une pâte à base de molybdène et de manganèse, de recuit sous hydrogène pour créer le verre, de dépôt d'une couche de nickel ou de palladium par électrolyse et de brasage proprement dit avec une base argent. Par ailleurs, il présente l'inconvénient de nécessiter une atmosphère d'hydrogène lors de l'étape de recuit.

D'autres procédés de brasage utilisent la réaction d'éléments réactifs tels que Ti, Zr et Hf avec la surface de l'alumine. Ceci peut être effectué en déposant préalablement sur l'alumine une couche de titane et en réalisant ensuite le brasage avec une base argent, ou en utilisant directement une brasure contenant l'élément réactif associé à une matrice telle qu'une matrice Ag-Cu comme il est décrit par A.J. Moorhead dans Journal of Materials Science, 26, 1991, pages 4067-4075, et dans US-A-5 152 449 et JP-A-61/169189.

Le document JP-A-59/141395 décrit une autre technique de brasage de pièces en céramique, selon laquelle on ajoute à une brasure à base d'argent, de cuivre, de nickel, etc. au moins un élément métallique capable d'absorber l'hydrogène. Cet élément métallique peut être choisi parmi Li, Na, K, Be, Mg, Ca, Sr, Ba, Al, Sc, Y, La, Ti, Zr, Hf, V, Nb et Ta. Grâce à la présence de cet élément métallique qui est capable d'absorber l'hydrogène à l'état fondu, on obtient un corps poreux car l'hydrogène est libéré lorsque la brasure se solidifie, et on diminue les contraintes thermiques susceptibles de se produire au niveau du joint de brasure en raison de la différence entre les coefficients de dilatation thermique des matériaux assemblés.

Ce dernier procédé présente l'inconvénient de nécessiter la présence d'hydrogène lors de la fusion de la brasure. Or, l'emploi d'hydrogène est délicat et dangereux. On peut toutefois générer l'hydrogène à partir de l'air, par décomposition de l'humidité qu'il contient, mais dans ce dernier cas, si l'on utilise le magnésium, celui-ci sera fortement oxydé lors de cette opération.

La présente invention a précisément pour objet une composition et un procédé de brasage utilisant un métal réactif mais ne nécessitant pas la présence d'hydrogène pour réaliser l'opération de brasage.

Selon l'invention, la composition de la brasure, pour le brasage d'un matériau céramique contenant de l'alumine avec un matériau céramique ou avec un métal, est constituée de magnésium et d'au moins un métal précieux choisi parmi le palladium, le platine, l'or et leurs alliages.

Dans cette composition, l'adjonction de magnésium à un métal précieux tel que Pd, Pt ou Au, permet d'augmenter le mouillage du matériau céramique par rapport à l'emploi de métal précieux seul. De plus, le magnésium réagit avec l'alumine du matériau céramique pour constituer une couche formée d'alumine et de magnésie ou encore de composés du type spinelle qui permet un bon accrochage entre la brasure et les éléments en matériau céramique ou en métaux à assembler.

De préférence, cette composition de la brasure est formée d'un alliage du métal précieux choisi parmi Pd, Pt et Au, et de magnésium, qui contient au plus 5 % en poids de magnésium.

A titre d'exemples de tels alliages, on peut citer les alliages de palladium et de magnésium contenant de 2 à 4,5 % en poids de Mg.

Pour réaliser le brasage d'un premier élément en céramique contenant de l'alumine avec un second élément en céramique ou en métal, on peut disposer entre ces deux éléments une composition de brasure présentant les caractéristiques données ci-dessus, et porter l'ensemble à une température de 1300 à 1600°C sous une atmosphère de gaz neutre, par exemple d'argon.

La température de brasage est choisie en fonction de la teneur en magnésium de la composition ; des températures de 1300°C à 1540°C sont appropriées. Ces températures sont inférieures à la température de fusion du palladium (1555°C) ou du platine (1773°C), mais elles sont très supérieures à la température d'ébullition du magnésium (1107°C).

Toutefois, malgré l'emploi de températures aussi élevées, il ne se produit pas d'évaporation notable du magnésium lors du brasage. De même, bien que le magnésium ait tendance à s'oxyder facilement à de telles températures, on évite cette oxydation grâce à la présence du métal précieux tel que le palladium.

Généralement, la composition de brasure est interposée entre les deux éléments sous la forme de clinquant ou de feuille de faible épaisseur, par exemple d'une épaisseur de 20 à 200 µm. Cette feuille ou clinquant peut être élaboré par fusion du métal précieux et du magnésium à une température d'environ 1540°C sous hydrogène, à partir de métal précieux et de magnésium de pureté commerciale. On peut ensuite laminer à froid la brasure pour obtenir une feuille d'épaisseur appropriée. En effet, avec des concentrations en magnésium inférieures à 5 % en poids, le magnésium est en solution solide dans le métal précieux et l'alliage est ductile. Pour préparer un clinquant, on peut aussi utiliser d'autres techniques telles que la trempe sur roue d'alliage fondu (*melt-spinning*).

On peut aussi utiliser d'autres techniques pour interposer la composition de brasage entre les éléments à assembler. Ainsi, on peut déposer cette composition sur le ou les éléments par des techniques telles que le dépôt physique en phase vapeur (PVD), la pulvérisation cathodique ou l'évaporation.

Pour fondre ensuite la brasure en la portant à la température de 1300 à 1600°C, on peut utiliser différentes techniques de chauffage, par exemple un laser, un faisceau d'électrons, un chauffage par induction ou par l'intermédiaire d'un résistor. L'atmosphère utilisée lors du chauffage est une atmosphère de gaz inerte, par exemple d'argon.

Les brasures à base de magnésium et de Pd, Pt et/ou Au de l'invention sont avantageuses, car elles permettent d'assembler en une seule opération des éléments en céramique contenant de l'alumine avec d'autres éléments en céramique contenant de l'alumine ou en métaux. Les matériaux céramiques contenant de l'alumine peuvent être par exemple l'alumine, le saphir pur, la mullite, la cordiérite. Les métaux peuvent être le platine, les métaux réfractaires comme Mo, Nb, Ta, Zr, Ti et W, et les alliages à base de métaux réfractaires.

On peut réaliser l'assemblage à des températures supérieures à 1300°C, ce qui permet d'obtenir des assemblages résistant jusqu'à des températures de 1150°C. Par ailleurs, ces assemblages résistent à des atmosphères oxydantes, car la présence de magnésium induit la formation d'une couche passivante. De plus, la brasure reste ductile après l'opération de brasage et peut ainsi absorber les contraintes résiduelles qui peuvent être par exemple générées par des cyclages thermiques.

Le procédé de l'invention s'applique en particulier à la réalisation de pièces de forme complexe en céramiques techniques, qui sont difficiles à fabriquer, mais qui peuvent être réalisées à partir d'éléments en céramique de forme simple par assemblage céramique-céramique et céramique-métal. De telles pièces peuvent être des composants pour des applications à haute température, par exemple :
- des capteurs de position permettant de mesurer l'espacement entre les parties fixe et mobile des moteurs d'avions,
- des allumeurs de chambres de combustion pour moteurs d'avions, et
- des échangeurs de chaleur en céramique pour des applications à très haute température.

La réalisation de tels composants nécessite généralement l'assemblage d'alumine avec de l'alumine, du platine ou du palladium.

D'autres caractéristiques et avantages de l'invention apparaîtront à la lecture des exemples suivants donnés bien entendu à titre illustratif et non limitatif.

### EXEMPLE 1 : Assemblage de deux éléments en alumine.

Pour réaliser cet assemblage, on utilise un feuillard de palladium contenant 2 % en poids de magnésium, d'une épaisseur de 100-200 µm.

On prépare ce feuillard par fusion à 1540°C, sous une atmosphère contenant de l'hydrogène, des quantités voulues de palladium et de magnésium de pureté commerciale. On soumet ensuite l'alliage obtenu à un laminage pour former un feuillard de 100 à 200 µm d'épaisseur, que l'on découpe ensuite aux dimensions des éléments à assembler. On place ce feuillard entre les deux éléments en alumine qui ont été préalablement nettoyés et on dispose un poids sur l'ensemble pour assurer un bon contact. On introduit ensuite l'ensemble dans un four où on effectue le cycle de brasage sous atmosphère d'argon de la façon suivante.

On porte tout d'abord l'ensemble à une température de 300°C pendant une heure, puis on l'amène à la température de brasage de 1540°C et on le maintient à cette température pendant 10 minutes, sous une pression d'argon de 0,1 MPa.

On obtient ainsi un assemblage résistant. En effet, en réalisant un test mécanique en cisaillement sur la liaison alumine-brasure-alumine, on a obtenu la rupture à 160 MPa.

### EXEMPLE 2 : Assemblage de deux éléments en alumine.

Dans cet exemple, on suit le même mode opératoire que dans l'exemple 1, sauf que l'on utilise un feuillard de palladium comprenant 3 % en poids de magnésium et que l'on réalise le brasage à une température de 1520°C en maintenant cette température pendant 10 minutes.

Le test mécanique en cisaillement conduit à une rupture de la liaison alumine-brasure-alumine à 72 MPa.

### EXEMPLE 3 : Assemblage de deux éléments en alumine.

Dans cet exemple, on suit le même mode opératoire que dans l'exemple 1, sauf que l'on utilise un feuillard de palladium contenant 4,5 % en poids de magnésium et que l'on réalise le brasage à une température de 1500°C pendant 10 minutes.

Le test mécanique en cisaillement a conduit à une rupture de la liaison alumine-brasure-alumine à 170 MPa.

On a par ailleurs testé la résistance à l'oxydation des assemblages obtenus dans les Exemples 1, 2 et 3, en les maintenant pendant 12 heures à 1150°C sous air, suivi d'un refroidissement naturel hors du four. Dans ces conditions, aucun des assemblages ne présentait de signe de détérioration.

### EXEMPLE 4 : Assemblage d'un élément en alumine avec un élément en platine.

On suit le même mode opératoire que dans l'exemple 1 sauf que l'on utilise un feuillard de palladium comprenant 3 % de magnésium que l'on place entre l'élément en alumine et l'élément en platine préalablement nettoyés. On réalise ensuite le brasage après un palier à une température de 300°C pendant 1 heure dans les conditions suivantes :
- température de brasage : 1520°C,
- durée du palier : 10 minutes,
- pression d'argon : 0,1 MPa.

Un test mécanique en cisaillement réalisé sur cet assemblage a conduit à une rupture de la liaison alumine-brasure-platine à 154 MPa.

Les assemblages obtenus conformément à l'invention présentent ainsi une résistance satisfaisante à la rupture et à l'oxydation, ce qui les rend intéressants pour de nombreuses applications.

## Revendications

1. Composition de brasure pour le brasage, d'un matériau céramique contenant de l'alumine avec un matériau céramique ou avec un métal, caractérisée en ce qu'elle est constituée de magnésium et d'au moins un métal précieux choisi parmi le palladium, le platine, l'or et leurs alliages.

2. Composition selon la revendication 1, caractérisée en ce qu'elle est formée d'un alliage du métal précieux choisi parmi Pd, Pt et Au, et de magnésium contenant au plus 5% en poids de magnésium.

3. Composition selon la revendication 2, caractérisée en ce que l'alliage est un alliage de palladium et de magnésium contenant de 2 à 4,5% en poids de Mg.

4. Procédé de brasage d'un premier élément en céramique contenant de l'alumine avec un deuxième élément en céramique ou en métal, caractérisé en ce que l'on dispose entre les deux éléments une composition de brasure selon l'une quelconque des revendications 1 à 3, et en ce que l'on porte l'ensemble à une température de 1300 à 1600°C sous une atmosphère de gaz neutre.

5. Procédé selon la revendication 4, caractérisé en ce que la composition est sous la forme d'une feuille ayant une épaisseur de 20 à 200 µm.

6. Procédé selon l'une quelconque des revendications 4 et 5, caractérisé en ce que premier et le second éléments sont en alumine.

7. Procédé selon l'une quelconque des revendications 4 et 5, caractérisé en ce que le second élément est en métal réfractaire, en platine ou en alliage réfractaire.

8. Procédé selon la revendication 7, caractérisé en ce que le premier élément est en alumine et le second élément est en platine.

## Patentansprüche

1. Hartlotzusammensetzung für das Verlöten eines aluminiumoxidhaltigen keramischen Materials mit einem keramischen Material oder mit einem Metall,
**dadurch gekennzeichnet,**
dass es gebildet wird durch Magnesium und wenigstens ein Edelmetall, ausgewählt unter Palladium, Platin, Gold und ihren Legierungen.

2. Zusammensetzung nach Anspruch 1, dadurch gekennzeichnet, dass es durch eine Legierung aus einem unter Pd, Pt und Au ausgewählten Edelmetall und Magnesium gebildet wird, die höchstens 5% Gew.% Magnesium enthält.

3. Zusammensetzung nach Anspruch 2, dadurch gekennzeichnet, dass die Legierung eine Legierung aus Palladium und Magnesium ist, die 2 bis 4,5 Gew.% Magnesium enthält.

4. Verfahren zum Verlöten eines ersten aluminiumoxidhaltigen Elements aus Keramik mit einem zweiten Element aus Keramik oder Metall, dadurch gekennzeichnet, dass man zwischen den beiden Elementen eine Hartlotzusammensetzung nach einem der Ansprüche 1 bis 3 anbringt und dass man das Ganze in einer Atmosphäre aus neutralem Gas auf eine Temperatur von 1300 bis 1600°C bringt.

5. Verfahren nach Anspruch 4, dadurch gekennzeichnet, dass die Zusammensetzung die Form einer Folie hat und 20 bis 200 µm dick ist.

6. Verfahren nach einem der Ansprüche 4 und 5, dadurch gekennzeichnet, dass das erste und das zweite Element aus Aluminiumoxid sind.

7. Verfahren nach einem der Ansprüche 4 und 5, dadurch gekennzeichnet, dass das zweite Element aus refraktärem Metall, aus Platin oder aus einer refraktären Legierung ist.

8. Verfahren nach Anspruch 7, dadurch gekennzeichnet, dass das erste Element aus Aluminiumoxid ist und das zweite Element aus Platin.

## Claims

1. Brazing composition for the brazing of a ceramic material containing alumina with a ceramic material or with a metal, characterized in that it is constituted by magnesium and at least one precious metal chosen from among palladium, platinum, gold and their alloys.

2. Composition according to claim 1, characterized in that it is formed by an alloy of the precious metal chosen from among Pd, Pt and Au, and magnesium containing at the most 5 wt.% magnesium.

3. Composition according to claim 2, characterized in that the alloy is an alloy of palladium and magnesium containing 2 to 4.5 wt..% Mg.

4. Process for brazing a first ceramic element containing alumina with a second ceramic element or a metal element, characterized in that between the two elements is placed a brazing solder composition according to any one of the claims 1 to 3 and in that the assembly is raised to a temperature of 1300 to 1600°C under a neutral gas atmosphere.

5. Process according to claim 4, characterized in that the composition is in the form of a sheet with a thickness of 20 to 200 µm.

6. Process according to either of the claims 4 and 5, characterized in that the first and second elements are of alumina.

7. Process according to either of the claims 4 and 5, characterized in that the second element is of refractory metal, platinum or refractory alloy.

8. Process according to claim 7, characterized in that the first element is of alumina and the second element is of platinum.
